# EUROPÄISCHE PATENTANMELDUNG

(11) **EP 3 839 983 A1**
(43) Veröffentlichungstag der Anmeldung: **23.06.2021**
(21) Anmeldenummer: 20213378.1
(22) Anmeldetag: 11.12.2020
(51) Int. Cl.: H01C 7/12, H01H 36/00, H02H 9/04

(54) **ÜBERSPANNUNGSSCHUTZVORRICHTUNG SOWIE SYSTEM**

(30) Priorität: 19.12.2019 DE 102019135206
(71) Anmelder: Karl Storz SE & Co. KG, 78532 Tuttlingen (DE)
(72) Erfinder: STORZ, Klaus, 78532 Tuttlingen (DE)
(74) Vertreter: Patent- und Rechtsanwälte Behrmann Wagner PartG mbB

(57) **Zusammenfassung**

Die Erfindung betrifft eine Überspannungsschutzvorrichtung (1) zum Schutz vor transienten Überspannungen für aus einem Niederspannungsnetz gespeiste elektrische Verbraucher, insbesondere Netzteile, umfassend wenigstens drei Varistoren (2), die dahingehend elektrisch verschaltet sind, dass durch eine Sternschaltung (7) ein Sternpunkt ausgebildet wird und wenigstens ein schaltbares Element (3), das einen Steuerkontakt (4) zum Ansteuern des schaltbaren Elements (3) und zwei Leistungskontakte (5, 6) zum elektrischen Kontaktieren des schaltbaren Elements (3) aufweist, wobei in Reaktion auf das Ansteuern des schaltbaren Elements (3) mittels einem Ansteuersignal die beiden Leistungskontakte (5, 6) leitend miteinander verbindbar sind, und wobei die Sternschaltung (7) entweder unmittelbar oder mittelbar über das schaltbare Element (3) mit einem Neutralleiter (13), einem Außenleiter (12) oder einem Schutzleiter (14), insbesondere mit PE, elektrisch kontaktiert ist.

## Beschreibung

Die vorliegende Erfindung betrifft eine Überspannungsschutzvorrichtung nach Anspruch 1. Ferner betrifft die vorliegende Erfindung ein System bestehend aus einem Netzteil nach Anspruch 10, das eine erfindungsgemäße Überspannungsschutzvorrichtung zum Schutz vor transienten Überspannungen umfasst.

Aus dem Stand der Technik sind Überspannungsschutzvorrichtungen für elektrische Verbraucher zum Schutz vor leitungsgebundenen Überspannungen allgemein bekannt. Die bekannten Überspannungsschutzvorrichtungen sollen elektrische Verbraucher, die mit elektrischer Energie aus dem Niederspannungsnetz versorgt werden, vor Beschädigung oder Zerstörung durch leitungsgebundene Überspannungen schützen.

Solche transienten Überspannungen, die sich über die Leitungen des Niederspannungsnetzes ausbreiten, werden auch als "Surge" bezeichnet und können beispielsweise durch einen unmittelbaren Blitzeinschlag in das Niederspannungsnetz entstehen. Selbst wenn ein Blitz nicht direkt in die Versorgungsleitungen, die aus Außenleitern, einem Neutralleiter und einem Schutzleiter gebildet werden, einschlägt, können dennoch durch induktive Einkopplungen kritische Überspannungen entstehen, die zu einer verkürzten Lebensdauer der Netzteile führen oder diese durch Zerstörung sogar vollständig außer Betrieb setzen können. Zudem treten Überspannungen auch infolge von Schalthandlungen von leistungsstarken Maschinen oder induktiven Verbrauchern oder auch durch fehlerbedingte Kurzschlüsse im Stromversorgungsnetz auf.

Bei den elektrischen Verbrauchern handelt es sich etwa um Netzteile, die für die Erzeugung von Betriebsversorgungsspannungen für elektrische Baugruppen vorgesehen sind und etwa eine 12V-Gleichspannung oder eine umgeformte Wechselspannung erzeugen. Da die elektrischen Baugruppen teils empfindliche Bauteile aufweisen, die durch von der üblichen Betriebsspannung abweichende Überspannungen beschädigt oder gar vollständig zerstört werden, ist eine Begrenzung solcher Überspannungen für einen zuverlässigen und langlebigen Betrieb der elektrischen Baugruppen unbedingt erforderlich.

Aus dem Stand der Technik sind hierfür Überspannungsschutzvorrichtungen bekannt, die Schutzbauelemente umfassen, um gefährliche Überspannungen zu begrenzen. Die Schutzbauelemente sind dabei so ausgebildet, dass beim Überschreiten eines Spannungsschwellwertes ein Eingriff durch die Überspannungsschutzvorrichtung erfolgt, um kritische Überspannungen zu begrenzen. Die bekannten Überspannungsschutzvorrichtungen werden hierfür unmittelbar dem Netzanschlusspunkt des elektrischen Verbrauchers zugeordnet, um die dahinter angeordneten elektrischen Baugruppen der elektrischen Verbraucher zu schützen. Als Schutzbauelemente werden im Allgemeinen Varistoren eingesetzt, deren als Durchbruchspannung bezeichnete Schwellspannung in Abhängigkeit der im elektrischen Verbraucher verbauten elektrischen Baugruppen gewählt wird.

Eine als "Surge Arrester" bezeichnete Überspannungsschutzvorrichtung mit Varistoren ist beispielsweise aus dem "EPCOS Product Brief 2016" bekannt.

Nachteilig bei den bekannten Überspannungsschutzvorrichtungen ist eine allgemeine Begrenzung der eingangsseitig am elektrischen Verbraucher anlegbaren Gleichspannung (Messspannung) durch die gewählte Durchbruchspannung des Varistors bzw. des Schutzbauelements der Überspannungsschutzvorrichtung. Dies hat zur Folge, dass auch aus Test- und/oder Prüfzwecken eingangsseitig am elektrischen Verbraucher angelegte DC-Messspannungen beim Überschreiten der Durchbruchspannung durch die Überspanungsschutzvorrichtung begrenzt werden, was sich nachteilig auf das Test- und/oder Prüfergebnis auswirkt.

Aus diesem Grund ist es Aufgabe der vorliegenden Erfindung, die aus dem Stand der Technik bekannten Überspannungsschutzvorrichtungen dahingehend zu optimieren, dass es trotz einem gleichbleibend hohen Schutz des elektrischen Verbrauchers vor transienten Überspannungen (Surge) bei Test- und/oder Prüfzwecken mit DC-Messspannungen nicht zu einer negativen Beeinflussung durch die Überspannungsschutzvorrichtung kommt. Hierbei wird als Surge ein sehr schneller Spannungspuls mit einer sehr hohen Spannung und einer sehr hohen Energie verstanden.

Die Aufgabe wird durch die Überspannungsschutzvorrichtung nach den Merkmalen des Anspruchs 1 gelöst. Vorteilhafte Weiterbildungen der Erfindung sind in den Unteransprüchen beschrieben.

Erfindungsgemäß vorteilhaft umfasst die Überspannungsschutzvorrichtung zum Schutz vor transienten Überspannungen (Surge) für aus einem Niederspannungsnetz gespeiste elektrische Geräte, wie etwa Netzteile, mindestens drei Varistoren, die in einer Sternschaltung elektrisch verschaltet sind, wobei die drei Varistoren einen gemeinsamen Sternpunkt ausbilden. Ferner umfasst die erfindungsgemäße Überspannungsschutzvorrichtung ein schaltbares Element, das einen Steuerkontakt zum Ansteuern und Einschalten des schaltbaren Elements aufweist und zwei Leistungskontakte, die das elektrische Kontaktieren des schaltbaren Elements ermöglichen. Hierbei ist es erfindungsgemäß vorgesehen, dass in Reaktion auf das Ansteuern des schaltbaren Elements mit einem Ansteuersignal die beiden Leistungskontakte elektrisch leitend verbunden werden. Ferner ist es erfindungsgemäß vorgesehen, dass die freien Enden der Sternschaltung entweder unmittelbar oder mittelbar über das schaltbare Element mit dem Neutralleiter, einem Außenleiter oder dem Schutzleiter, insbesondere mit PE des Niederspannungsnetzes, elektrisch kontaktiert sind bzw. mit entsprechenden über einen Netzanschluss elektrisch kontaktierten Leitungen in Wirkverbindung stehen. Dies ermöglicht es vorteilhaft, beim Erfassen einer transienten Überspannung, die größer als der Spannungsschwellwert (Durchbruchspannung) der Überspannungsschutzvorrichtung ist, durch das Erzeugen eines Ansteuersignals das schaltbare Element anzusteuern, um eine elektrisch leitende Verbindung zu dem Schutzleiter herzustellen, und somit die auftretende Überspannung über das Erdreich, also PE, abzuleiten, wodurch sämtliche elektrische Baugruppen, die hinter der Überspannungsschutzvorrichtung im elektrischen Verbraucher, insbesondere im Netzteil, vorgesehen sind, vor der kritischen Überspannung geschützt werden können.

Die erfindungsgemäße Überspannungsschutzvorrichtung ist also mit den Versorgungsleitungen des Niederspannungsnetzes, die aus wenigstens einem Außenleiter, einem Neutralleiter und einem Schutzleiter ausgebildet sind, so verbunden, dass eine auftretende transiente Überspannung über wenigstens zwei Varistoren und das schaltbare Element in den Schutzleiter, also PE, abführbar ist. Hierfür sind ein erstes freies Ende der Sternschaltung mit einem der wenigstens einen Außenleiter, ein zweites freies Ende der Sternschaltung mit dem Schutzleiter und der freie Leistungskontakt des schaltbaren Elements, das am gegenüberliegenden Leistungskontakt mit dem dritten freien Ende der Sternschaltung verbunden ist, mit dem Schutzleiter, also PE, kontaktiert.

Zudem ist es erfindungsgemäß vorgesehen, dass das Ansteuersignal durch Ansteuermittel dahingehend erzeugt wird, dass das Ansteuersignal lediglich in Reaktion auf das Erfassen von transienten Überspannungen generiert wird. Wird die hinterlegte Durchbruchspannung dagegen aufgrund einer DC-Messspannung (Gleichspannung oder Messspannung mit einem niederfrequenten DC-Anteil) überschritten, wird von den Ansteuermitteln kein Ansteuersignal erzeugt, weshalb es nicht zu einer negativen Beeinflussung des Messergebnisses durch die erfindungsgemäße Überspannungsschutzvorrichtung kommt.

Mit anderen Worten ist für das Erfassen von transienten Überspannungen in den Ansteuermitteln ein Spannungsschwellwert hinterlegt, wobei nur beim Erfassen einer hohen Spannungssteilheit das Ansteuersignal erzeugt wird. Im Gegensatz dazu wird beim Erfassen einer sich nur langsam ändernden Überspannung trotz dem Überschreiten der hinterlegten Durchbruchspannung (Spannungsschwellwert) kein Steuersignal erzeugt, weshalb es nicht zu einer Begrenzung der Überspannung durch die Überspannungsschutzvorrichtung kommt.

Die erfindungsgemäße Überspannungsschutzvorrichtung umfasst also anders ausgedrückt wenigstens drei Varistoren, die so elektrisch verschaltet sind, dass durch eine Sternschaltung ein gemeinsamer Sternpunkt ausgebildet wird, Ansteuermittel, die in Reaktion auf das Erfassen einer transienten Überspannung ein Ansteuersignal erzeugen, sowie wenigstens ein schaltbares Element, das einen Steuerkontakt zum Ansteuern des schaltbaren Elements und zwei Leistungskontakte zum elektrischen Kontaktieren des schaltbaren Elements aufweist, wobei das schaltbare Element dahingehend ausgebildet ist, dass in Reaktion auf das Ansteuern des schaltbaren Elements mittels dem Ansteuersignal die beiden Leistungskontakte in einem geschlossenen Zustand des schaltbaren Elements leitend miteinander verbindbar sind und wobei die dem gemeinsamen Sternpunkt gegenüberliegenden Anschlüsse der Sternschaltung (7) entweder unmittelbar mit wenigstens einem Außenleiter (12) oder einem Neutralleiter (13) oder mittelbar über das schaltbare Element (3) mit einem Schutzleiter (14), insbesondere mit PE, elektrisch kontaktiert sind, um in dem geschlossenen Zustand des schaltbaren Elements (3) eine transiente Überspannung über wenigstens zwei Varistoren (2) sowie das schaltbare Element (3) auf den Schutzleiter, insbesondere PE, abzuführen.

Nochmals anders ausgedrückt bedeutet dies, bevorzugt, dass die Sternschaltung zum einen mit dem Phasenleiter und/oder dem Nullleiter sowie zusätzlich mit dem Schutzleiter, also PE, verbunden ist.

In einer Weiterbildung der Erfindung ist es vorteilhaft vorgesehen, dass das wenigstens eine schaltbare Element durch ein ansteuerbares Halbleiterbauelement ausgebildet ist. Hierbei ist es weiterbildend vorgesehen, dass dieses Halbleiterbauelement durch wenigstens einen TRIAC (Wechselstromdiode), einen Bipolartransistor (IGBT) oder einen Metall-Oxid-Halbleiter-Feldeffekttransistor (MOSFET) ausgebildet ist. Vorteilhaft ermöglicht dies, das schaltbare Element kostengünstig zu realisieren. Ferner gewährleistet dies auch, dass die in Bezug auf transiente Überspannungen erforderliche Dynamik für das Einschalten und Ableiten der Überspannung eingehalten werden kann, da die oben genannten Halbleiterbauelemente bei einer geeigneten Ansteuerung sehr geringe Ein- und Ausschaltzeiten realisieren.

Weiterbildend ist es im Rahmen der Erfindung vorgesehen, dass die Überspannungsschutzvorrichtung eine Gasentladungsröhre umfasst, die zusätzlich zu den Varistoren zum Überwachen und Ableiten der Überspannung vorgesehen ist. In diesem Zusammenhang ist anzumerken, dass bei Varistoren beim Überschreiten der Durchbruchspannung teils hohe Alterungseffekte auftreten. Diese Alterungseffekte führen dazu, dass sich die elektrischen Eigenschaften des Varistors ändern, da der Varistor in Bereichen seiner Nennspannung nichtmehr vollständig sperrt. Dies führt zu einem über den Varistor fließenden Fehlerstrom, der zur Erwärmung des Varistors führt. Neben dem thermischen Überwachen der Varistoren zum Erfassen einer solchen Fehlfunktion mittels einer thermischen Sicherung zum Trennen des elektrischen Kontakts und/oder zum Auslösen eines Fehlersignals ist es im Rahmen einer bevorzugten Weiterbildung der Erfindung auch vorgesehen, dass diesem negativen Effekt durch die zusätzliche Gasentladungsröhre entgegengewirkt wird. So kann ein solcher Fehlerstrom durch die seriell verschaltete Gasentladungsröhre verhindert werden. Daher kann es zum langfristigen sicheren Ableiten von auftretenden Überspannungen sinnvoll sein, dass zusätzlich die Gasentladungsröhre in der Schutzvorrichtung vorgesehen wird. Hierdurch können vorteilhaft etwaige Fehlfunktionen der Überspannungsschutzvorrichtung reduziert werden, wodurch vorteilhaft kritische Situationen in Bezug auf den energetisch zu versorgenden elektrischen Verbraucher oder gar Personen vermieden werden kann.

In einer Weiterbildung der Erfindung ist es vorgesehen, dass wenigstens ein Varistor und mindestens ein schaltbares Element, bevorzugt das wenigstens eine schaltbare Halbleiterbauelement oder der weiterbildend vorgesehene TRIAC, der IGBT, oder das MOSFET, in einer elektrischen Reihenschaltung dahingehend elektrisch kontaktiert sind, dass ein Leistungskontakt des schaltbaren Elements mit dem Schutzleiter, also PE, elektrisch kontaktiert ist. Alternativ ist es in diesem Zusammenhang auch weiterbildend vorgesehen, dass der wenigstens eine Varistor, die wenigstens eine Gasentladungsröhre sowie das wenigstens eine schaltbare Element die Reihenschaltung ausbilden, wobei auch hier ein Leistungskontakt des schaltbaren Elements in der Reihenschaltung endseitig mit dem Schutzleiter elektrisch kontaktiert sein soll. Dies ermöglicht vorteilhaft, dass etwaige auftretende Überspannungen über die Reihenschaltung auf den Schutzleiter ableitbar sind, wenn das schaltbare Element beim Erfassen einer transienten Überspannung eingeschaltet wird.

Zudem ist es im Rahmen einer weiteren Ausführungsform einer bevorzugten Weiterbildung der Erfindung vorgesehen, dass der Steuerkontakt des schaltbaren Elements über die Ansteuermittel mit dem Sternpunkt der Sternschaltung der Varistoren verbunden ist, um in Abhängigkeit des Potentials des Sternpunktes das Ansteuersignal für das schaltbare Element zu erzeugen. Eine entsprechend vorteilhafte Auslegung der Ansteuermittel ermöglicht somit das zuverlässige und rechtzeitige Ansteuern des schaltbaren Elements, wobei es ganz besonders bevorzugt ist, wenn hierbei von dem schaltbaren Element in Bezug auf die Einschaltzeit des schaltbaren Elements eine kürzere Einschaltzeit realisiert wird, als die Einschaltzeit des durch die Ansteuermittel überbrückten Varistors. Mit anderen Worten ist es bevorzugt vorgesehen, dass das schaltbare Element bereits eingeschaltet ist, wenn der zwischen dem Sternpunkt und dem schaltbaren Element angeordnete Varistor von dem sperrenden in den leitenden Zustand wechselt.

In diesem Zusammenhang ist es weiterbildend vorgesehen, dass die Ansteuermittel das Steuersignal in Reaktion auf das Erfassen einer leitungsgebundenen transienten Überspannung am Sternpunkt erzeugen und an den Steuerkontakt des schaltbaren Elements übermitteln. Weiterbildend ist es in diesem Zusammenhang auch als vorteilhaft zu erwähnen, wenn sich das Bezugspotential des Ansteuersignals auf den Leistungskontakt des schaltbaren Elements bezieht, der unmittelbar mit dem Schutzleiter, also insbesondere PE, verbunden ist.

Zudem umfasst eine besonders bevorzugte Ausführungsform der Erfindung Ansteuermittel, die durch ein passives elektronisches Bauelement, also insbesondere einen Kondensator, ausgebildet sind, wodurch sich die Ansteuermittel nicht nur kostengünstig, sondern auch platzsparend realisieren lassen. Hierbei können die elektrischen Eigenschaften des Kondensators vorteilhaft ausgenutzt werden, da transiente Überspannungen (Surge) aufgrund des hohen Wechselanteils den Kondensator passieren, wohingegen bei sich nur sehr langsam aufbauenden Überspannungen (Messspannungen), wie sie für Prüf- und/oder Messzwecke genutzt werden, aufgrund des geringen Wechselanteils durch den Kondensator blockiert werden. Somit ist es vorteilhaft möglich, dass nur durch transiente Überspannungen ein Ansteuersignal erzeugt wird.

Ferner umfasst eine Ausführungsform dieser Weiterbildung auch Ansteuermittel, die durch einen X- oder Y-Kondensator, insbesondere einen Y1-Kondensator mit einer Impulsspannungsfestigkeit von mindestens 2500V ausgebildet sind. Hierbei ist es bevorzugt, wenn der Y-Kondensator eine Kapazität zwischen 1nF bis 20nF, bevorzugt 2,2nF bis 10nF, besonders bevorzugt 2,2nF bis 5nF aufweist. Gerade hier haben verschiedene Versuche gezeigt, dass sich diese Art an Kondensatoren besonders für die erfindungsgemäße Überspannungsschutzvorrichtung eignet.

Zudem ist es im Rahmen einer Weiterbildung der Erfindung vorgesehen, dass der Neutralleiter über eine Reihenschaltung von wenigstens zwei Varistoren, wenigstens einer Gasentladungsröhre und wenigstens einem TRIAC mit dem Schutzleiter verbunden ist und/oder dass der Außenleiter über eine Reihenschaltung von wenigstens zwei Varistoren, wenigstens einer Gasentladungsröhre und wenigstens einem TRIAC mit dem Schutzleiter verbunden ist, wodurch sich ein vorteilhaftes Ableiten von transienten Überspannungen sowohl vom Neutralleiter als auch von einem der Außenleiter (Phasenleiter) auf den Schutzleiter, also PE, realisieren lässt. Hierbei ist zusätzlich zu erwähnen, dass die beiden eben aufgeführten Reihenschaltungen alternativ auch ohne eine Gasentladungsröhre ausgebildet sein können.

Im Rahmen der Erfindung wird allerdings auch Schutz beansprucht für ein System, bestehend aus einem Netzteil zum Erzeugen von Betriebsversorgungsspannungen von medizinischen Geräten, insbesondere Spül- und Absaugpumpen für Flüssigkeiten, Insufflatoren für die Zuführung von Insufflationsgas in den Körper, insbesondere von C02, oder Lichtquellen umfassend eine erfindungsgemäß ausgebildete Überspannungsschutzvorrichtung.

Zudem umfasst die Erfindung auch ein medizinisches Gerät, insbesondere eine Spül- und Absaugpumpe für Flüssigkeiten, einen Insufflator für die Zuführung von Insufflationsgas in den Körper, insbesondere von C02, oder eine Lichtquelle, die ein Netzteil mit einer erfindungsgemäßen Überspannungsschutzvorrichtung umfasst. Hierbei kann im Rahmen der Erfindung das Netzteil innerhalb des Gehäuses des medizinischen Geräts angeordnet sein oder aber auch in Form eines Moduls oder einer getrennt und/oder eigens ausgebildeten Einheit in einem separaten Gehäuse vorgesehen sein.

Weitere Vorteile, Merkmale und Einzelheiten der Erfindung ergeben sich aus der nachfolgenden Beschreibung bevorzugter Ausführungsbeispiele der Erfindung sowie anhand der Zeichnungen; diese zeigen in:
- Fig. 1: eine schematische Darstellung einer bevorzugten Ausführungs-form der erfindungsgemäßen Überspannungsschutzvorrichtung und in
- Fig. 2: eine weitere schematische Darstellung einer weiteren bevorzugten Ausführungsform der erfindungsgemäßen Überspannungsschutzvorrichtung.

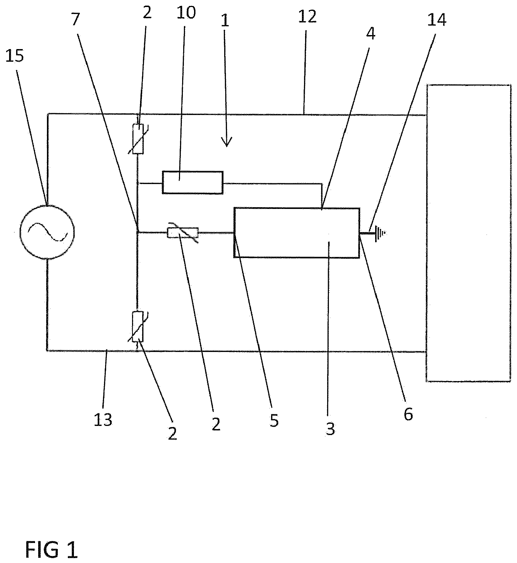

In der Fig. 1 ist in schematischer Darstellung der Aufbau einer erfindungsgemäßen Überspannungsschutzvorrichtung 1 in einer besonders bevorzugten Ausführungsform dargestellt. Die Überspannungsschutzvorrichtung 1 ist zum Schutz vor transienten Überspannungen aus einem Niederspannungsnetz eingangsseitig, also unmittelbar hinter dem Netzanschluss 15, im elektrischen Verbraucher, wie etwa ein Netzteil zum Versorgen von medizinischen Geräten, vorgesehen. Erfindungsgemäß umfasst die Überspannungsschutzvorrichtung 1 drei Varistoren 2, die elektrisch in einer Sternschaltung 7 verschaltet sind, wodurch die drei Varistoren 2 einen Sternpunkt ausbilden. Ferner umfasst die dargestellte Überspannungsschutzvorrichtung 1 ein als Blackbox dargestelltes schaltbares Element 3, das zwei Leistungskontakte 5, 6 zum elektrischen Kontaktieren des schaltbaren Elements 2 in der Überspannungsschutzvorrichtung 1 sowie einen Steuerkontakt 4 zum Ansteuern des schaltbaren Elements 3 aufweist. Hierbei ist das schaltbare Element 3 dahingehend ausgebildet, dass in Reaktion auf das Ansteuern des schaltbaren Elements 3 mit einem Ansteuersignal die beiden Leistungskontakte 5, 6 leitend miteinander verbunden werden, um beispielsweise eine Überspannung über das schaltbare Element 3 abzuleiten. Ferner ist es aus der dargestellten schematischen Übersicht der Überspannungsschutzvorrichtung 1 zu erkennen, dass die freien Enden der Sternschaltung 7 entweder mit dem Außenleiter 12, mit dem Neutralleiter 13 oder einem der Leistungskontakte 5 des schaltbaren Elements 3 elektrisch kontaktiert sind. Zudem wird es aus der Fig. 1 auch ersichtlich, dass der Steuerkontakt 4 über vorgesehene Ansteuermittel 10 mit dem Sternpunkt der Sternschaltung 7 verbunden ist.

In Betrieb ermöglicht die dargestellte Ausführungsform der Überspannungsschutzvorrichtung 1, transiente, also kurzzeitig auftretende leitungsgebundene, Überspannungen auf den Schutzleiter 14 abzuleiten, um sämtliche in Bezug auf den Netzanschluss 15 hinter der Überspannungsschutzvorrichtung 1 angeordnete elektrische Baugruppen vor der Überspannung zu schützen. Hierfür sind die Ansteuermittel 10 dahingehend ausgebildet, dass diese eine transiente Überspannung erkennen, und in Reaktion auf das Erfassen einer solchen transienten Überspannung ein Ansteuersignal für das schaltbare Element 3 erzeugen, um somit den Schutzleiter 14 mit dem unmittelbar hinter dem schaltbaren Element 3 angeordneten Varistor 2 elektrisch leitend zu verbinden. Dies ermöglicht es erfindungsgemäß vorteilhaft, dass die auftretende transiente Überspannung über zwei seriell verschaltete Varistoren 2 sowie das schaltbare Element 3 auf den Schutzleiter 14 und somit auf das Erdpotential abgeleitet werden kann.

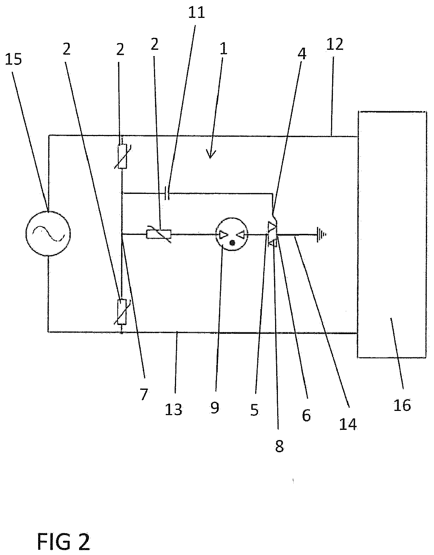

In der Fig. 2 ist eine weitere Ausführungsform der erfindungsgemäßen Überspannungsschutzvorrichtung 1 dargestellt. Auch die in der Fig. 2 dargestellte Überspannungsschutzvorrichtung 1 ist zwischen einem Netzanschluss 15 des Niederspannungsnetzes und einem elektrischen Verbraucher 16, also insbesondere einem Netzteil für die Versorgung medizinischer Geräte, angeordnet. Ferner umfasst auch die hier dargestellte Überspannungsschutzvorrichtung 1 eine Sternschaltung 7, die durch drei Varistoren 2 ausgebildet ist.

Ein erstes freies Ende der Sternschaltung 7 ist mit einem der Außenleiter 12 des Niederspannungsnetzes verbunden und ein zweites freies Ende der Sternschaltung 7 ist mit dem Neutralleiter 13 des Niederspannungsnetzes verbunden. Das dritte freie Ende der Sternschaltung 7 ist nunmehr mit einer Gasentladungsröhre 9 verbunden, wobei das freie Ende der Gasentladungsröhre 9 mit einem TRIAC 8 elektrisch leitend kontaktiert ist, der in der hier dargestellten Ausführungsform das aus der Fig. 1 bekannte schaltbare Element 3 ersetzt. Das freie Ende des TRIAC 8 ist mit dem Schutzleiter 14 elektrisch kontaktiert und ermöglicht somit das Ableiten von auftretenden Überspannungen auf das Erdpotential.

Ferner ist es aus der Fig. 2 ersichtlich, dass die Ansteuermittel 10 nunmehr durch einen Kondensator 11 ausgebildet werden, wodurch es vorteilhaft ermöglicht wird, dass der Sternpunkt der Sternschaltung 7 über den Kondensator 11 mit dem Steuerkontakt 4 des TRIACs 8 in Wirkverbindung steht. In diesem Zusammenhang wird noch darauf hingewiesen, dass sich das Bezugspotential für den Steuerkontakt 4 des TRIACs 8 auf den unmittelbar mit dem Schutzleiter 14 verbundenen Leistungskontakt 6 bezieht. Zudem wird erwähnt, dass der Kondensator 11 durch einen Y-Kondensator ausgebildet ist, wobei dieser Y-Kondensator vom Typ eines Y1-Kondensators ist und somit eine Impulsspannungsfestigkeit von mindestens 2500V oder 5000V aufweist. Hierbei wurde ein Y1-Kondensator mit einer Kapazität von 2nF gewählt.

Wie zuvor bereits erwähnt, beruht die Erfindung darauf, dass der TRIAC 8 (in der Funktion des schaltbaren Elements) durch eine dynamische transiente Überspannung (leitungsgebunden) durch den Y1-Kondensator 11 angesteuert wird, wodurch eine elektrisch leitende Verbindung zwischen den beiden Leistungskontakten 5, 6 des TRIACs 8 hergestellt wird. Dies führt dazu, dass beim Überschreiten der Durchbruchspannung des mit dem TRIAC 8 kontaktierten Varistors 2 das Ableiten der Überspannung auf PE möglich ist. Ferner wird beim Anlegen einer sich nur langsam ändernden Messspannung, wie es für die Bestimmung der Isolationsspannung der Fall ist, kein Ansteuersignal erzeugt, weshalb es durch die erfindungsgemäße Überspannungsschutzvorrichtung 1 nicht zu einer negativen Beeinflussung des Messergebnisses kommt.

Im Ergebnis ist festzuhalten, dass die vorliegende Erfindung auf überraschend einfache Art einen wirksamen Schutz vor transienten Überspannungen liefert, wobei dennoch für Prüf- und/oder Messzwecke hohe DC-Messspannungen genutzt werden können, ohne dass es zu einer negativen Beeinflussung des Prüf- und/oder Messergebisses durch die erfindungsgemäße Überspannungsschutzvorrichtung kommt.

### Bezugszeichenliste

- 1: Überspannungsschutzvorrichtung
- 2: Varistor
- 3: schaltbares Element
- 4: Steuerkontakt
- 5: Leistungskontakt
- 6: Leistungskontakt
- 7: Sternschaltung
- 8: TRIAC
- 9: Gasentladungsröhre
- 10: Ansteuermittel
- 11: Kondensator
- 12: Phasenleiter / Außenleiter
- 13: Neutralleiter
- 14: Schutzleiter
- 15: Netzanschluss
- 16: elektrischer Verbraucher

## Patentansprüche

1. Überspannungsschutzvorrichtung (1) zum Schutz vor transienten Überspannungen für aus einem Niederspannungsnetz gespeiste elektrische Verbraucher, insbesondere Netzteile,
umfassend wenigstens drei Varistoren (2), die dahingehend elektrisch verschaltet sind, dass durch eine Sternschaltung (7) ein Sternpunkt ausgebildet wird,
Ansteuermittel (10), die in Reaktion auf das Erfassen einer transienten Überspannung ein Ansteuersignal erzeugen, sowie wenigstens ein schaltbares Element (3), das einen Steuerkontakt (4) zum Ansteuern des schaltbaren Elements (3) und zwei Leistungskontakte (5, 6) zum elektrischen Kontaktieren des schaltbaren Elements (3) aufweist, wobei das schaltbare Element (3) dahingehend ausgebildet ist, dass in Reaktion auf das Ansteuern des schaltbaren Elements (3) mittels dem Ansteuersignal die beiden Leistungskontakte (5, 6) leitend miteinander verbindbar sind,
und wobei die freien Enden der Sternschaltung (7) entweder unmittelbar oder mittelbar über das schaltbare Element (3) mit einem Neutralleiter (13), einem Außenleiter (12) oder einem Schutzleiter (14), insbesondere mit PE, elektrisch kontaktiert sind.

2. Überspannungsschutzvorrichtung nach Anspruch 1,
**dadurch gekennzeichnet,**
**dass** das wenigstens eine schaltbare Element (3) als ansteuerbares Halbleiterbauelement, insbesondere als TRIAC (8), IGBT oder MOSFET, ausgebildet ist.

3. Überspannungsschutzvorrichtung nach Anspruch 1 oder 2,
**gekennzeichnet durch**
wenigstens eine Gasentladungsröhre (9).

4. Überspannungsschutzvorrichtung nach einem der Ansprüche 1 bis 3,
**dadurch gekennzeichnet,**
**dass** wenigstens ein Varistor (2), und das wenigstens eine schaltbare Element (3), bevorzugt das wenigstens eine schaltbare Halbleiterbauelement, besonders bevorzugt der TRIAC (8), das IGBT oder das MOSFET, eine Reihenschaltung ausbilden, wobei ein Leistungskontakt (6) des schaltbaren Elements (3) bei der Reihenschaltung mit dem Schutzleiter elektrisch kontaktiert ist oder dass insbesondere wenigstens ein Varistor (2), die wenigstens eine Gasentladungsröhre (9) und das wenigstens eine schaltbare Element (3), bevorzugt das wenigstens eine schaltbare Halbleiterbauelement, besonders bevorzugt der TRIAC (8), das IGBT oder das MOSFET eine Reihenschaltung ausbilden, wobei ein Leistungskontakt (6) des schaltbaren Elements (3) bei der Reihenschaltung mit dem Schutzleiter (14) elektrisch kontaktiert ist.

5. Überspannungsschutzvorrichtung nach einem der Ansprüche 1 bis 4,
**dadurch gekennzeichnet,**
**dass** der Steuerkontakt (4) des schaltbaren Elements (3), insbesondere des TRIAC (8), IGBT oder MOSFET, über die Ansteuermittel (10) zum Erzeugen des Ansteuersignals mit dem Sternpunkt der Varistoren (2) verbunden ist.

6. Überspannungsschutzvorrichtung nach Anspruch 5,
**dadurch gekennzeichnet,**
**dass** die Ansteuermittel (10) dahingehend ausgebildet sind, dass in Reaktion auf das Erfassen einer leitungsgebundenen transienten Überspannung, insbesondere Surge, das Ansteuersignal am Steuerkontakt (4) zum elektrischen Verbinden der beiden Leistungskontakte (5, 6) erzeugt wird.

7. Überspannungsschutzvorrichtung nach Anspruch 6,
**dadurch gekennzeichnet,**
**dass** die Ansteuermittel (10) durch ein passives elektronisches Bauelement, insbesondere einen Kondensator (11), realisiert sind.

8. Überspannungsschutzvorrichtung nach Anspruch 7,
**dadurch gekennzeichnet,**
**dass** das passive elektronische Bauelement als Y- oder X-Kondensator (11), insbesondere als Y1-Kondensator mit einer Impulsspannungsfestigkeit von mindestens 2500V, ausgebildet ist, wobei der Y-Kondensator einen Kapazität zwischen 1nF bis 20nF, bevorzugt 2,2nF bis 10nF, besonders bevorzugt 2,2nF bis 5nF aufweist.

9. Überspannungsschutzvorrichtung nach einem der Ansprüche 6 bis 8,
**dadurch gekennzeichnet, dass**
der Neutralleiter (13) über eine Reihenschaltung von wenigstens zwei Varistoren (2), wenigstens einer Gasentladungsröhre (9) und wenigstens einem TRIAC (8) mit dem Schutzleiter (14) verbunden ist und/oder
dass der Außenleiter (12) über eine Reihenschaltung von wenigstens zwei Varistoren (2) und wenigstens einem TRIAC (8) mit dem Schutzleiter (14) verbunden ist.

10. Netzteil zum Erzeugen von Versorgungsspannungen für medizinische Geräte, insbesondere Spül- und Absaugpumpen für Flüssigkeiten, Insufflatoren für die Zuführung von Insufflationsgas in den Körper, insbesondere CO2, oder Lichtquellen umfassend eine Überspannungsschutzvorrichtung, die nach einem der Ansprüche 1 bis 9 ausgebildet ist.
